# EUROPEAN PATENT SPECIFICATION

(11) **EP 1 869 612 B1**
(45) Date of publication and mention of the grant of the patent: **16.03.2011**
(21) Application number: 06727820.0
(22) Date of filing: 04.04.2006
(51) Int. Cl.: G06K 7/00

(54) **RFID READER WITH AN ANTENNA AND METHOD FOR OPERATING THE SAME**
RFID-LESEGERÄT MIT ANTENNE UND BETRIEBSVERFAHREN DAFÜR
LECTEUR RFID AVEC ANTENNE ET PROCEDE DE FONCTIONNEMENT DE CE LECTEUR

(30) Priority: 08.04.2005 EP 05102797
(43) Date of publication of application: 26.12.2007
(73) Proprietor: NXP B.V., 5656 AG Eindhoven (NL)
(72) Inventor: RAUBER, Michael, A-1101 Vienna (AT); WATZINGER, Hubert, A-1101 Vienna (AT); AMTMANN, Franz, A-1101 Vienna (AT)
(74) Representative: Schouten, Marcus Maria
(86) International application number: PCT/IB2006/051021
(87) International publication number: WO 2006/106481

(56) References cited:
- EP-A- 0 625 832
- DE-A1- 19 755 250
- US-A- 4 381 566
- US-A- 5 301 358
- US-A1- 2003 102 960
- PATENT ABSTRACTS OF JAPAN vol. 2000, no. 26, 1 July 2002 (2002-07-01) & JP 2001 267950 A (YUHSHIN CO LTD), 28 September 2001 (2001-09-28)

## Description

### FIELD OF THE INVENTION

The invention relates to an RFID reader comprising a signal generator for generating high frequency electrical signals and an antenna to which the high frequency electrical signals are feedable in a symmetric mode to produce an alternating electromagnetic field at the antenna.

The invention further relates to a method for operating an RFID reader comprising a signal generator for generating high frequency electrical signals and an antenna to which the high frequency electrical signals are feed in a symmetric mode.

### BACKGROUND OF THE INVENTION

From the document US 5,012,236 an electromagnetic transmission and detection apparatus is known comprising a transmission coil for producing a high intensity electromagnetic field including conductive windings circumscribing a substantially polygonal volume of space, and first and second receiver coils disposed within the polygonal volume of space for receiving a low-intensity electromagnetic field transmitted from an external source. The receiver coils are electrically connected to each other in a differential circuit relationship such that the magnitude of electrical signals induced in the receiver coils by uniform electromagnetic energy are substantially equal and opposite to one another. The differential circuit is operative to subtract the electrical signals induced in the receiver coils and output a differential output signal, which is at a minimum when the two receiver coils receive approximately equal quantities of energy and is at a maximum when one of the receiver coils receives more electromagnetic energy from the external source than the other receiver coil.

However, the known electromagnetic transmission and detection apparatus is only adapted to detect unbalances of the magnetic field from the external source received by the two receiver coils, but does not take into account that due to electric ground currents between the receiving coils and earth caused by a capacitive coupling between the receiving coils and their environment the apparatus itself contributes to an incomplete canceling of the induced voltages in the two receiver coils. Further, ground currents from the transmitter to earth result in unwanted common mode current loops between the apparatus and earth.

Generally, RFID systems comprise at least one reader and a plurality of transponders wherein the reader communicates with the transponders in a contactless manner, when the transponders are within the communication range of the reader. Both the reader and the transponders comprise antennas, which antennas are inductively coupled to one another, when the transponders are within the communication range of the reader. The reader transmits an electromagnetic field via its antenna that is modulated by the transponders. The reader detects these modulations as a modulated attenuation of the electromagnetic field and derives identification information from this modulated attenuation.

Further, the antennas of the reader and the transponders are inevitably also capacitively coupled to their environment. If the antennas are operated in an asymmetrical manner the capacitive coupling between the antennas and the environment causes ground currents to occur. This reduces the performance of the antennas and affects the communication between reader and transponders. In order to illustrate the severity of the problems caused by ground currents it should be noted that the area circumscribed by the antenna of the RFID reader may lie in the order of several square meters. The voltage applied to the antenna may reach several kilovolts and the electric current flowing in the antenna amounts to several amperes. The frequency of the electric signals applied to the antenna is in a typical application 13,56 MHz. Therefore, although the capacitance of the capacitive coupling between the antenna and earth only amounts to some picofarads it will be appreciated that the ground current can reach considerable strengths.

In order to reduce the negative effects of asymmetric operation of antennas it is commonly known to use transmissionline transformers that are adapted to carry out symmetrical transformation of electrical signals provided by an amplifier in an asymmetrical manner and to feed the antenna in a symmetrical manner with these transformed electric signals. An embodiment of such a transmissionline transformer is called BALUN (balanced-to-unbalanced transformer). However, even in case of using such a BALUN in connection to an antenna the antenna may become detuned in use, either temporarily by persons or things passing through the communication range of the antenna, or permanently e.g. by placing constructional elements like steel beams within the communication range of the antenna. Such detuning of a symmetrically operated antenna cannot be compensated by a BALUN.

From EP 0 625 832 A1 a reader device is known, which comprises means for automatic tuning of the resonance frequency of its antenna circuit in order to compensate against influences induced by the environment.

From a patent abstract of Japan, JP 2001 267950, an automatic antenna tuning system is known, which is designed for automatically correcting a change in an antenna tuning frequency by utilizing a varactor diode, for which a bias voltage is changed to vary the tuning frequency.

From DE 19755 250 A1 an identification system is known that allows for tuning the frequency of an antenna resonant circuit by means of detecting a change in the phase of two signals. Switching of capacitors connected to the antenna circuit performs the tuning.

From US 2003 / 0102960 A1 an identification system is known, which comprises means for automatically tracking and adjusting the resonance frequency of its antenna configuration.

From US 5,301,358 a wristwatch-paging receiver is known, which comprises an antenna tuning circuit. The antenna tuning circuit is connected to the antenna and during each tuning operation a bias voltage of a varactor - tuning the frequency of the antenna circuit - is swept over the full range and it is determined which bias voltage yields the maximum received signal strength.

Document US 4,381,566 discloses a tuning system for a symmetrical antenna configuration for RF signals. The tuning system provides a single bias voltage that is fed to the antenna system in order to keep it tuned.

### OBJECT AND SUMMARY OF THE INVENTION

It is an object of the invention to provide an RFID reader and a method in which the disadvantages defined above are avoided.

The invention is defined by the independent claims which have been delimited against US 4,381,566 cited above. Preferred embodiments are set out in the dependent claims.

The characteristic features according to the invention provide the advantage that the full performance of the antenna can be maintained even in the case of widely changing coupling capacities between the antenna and its environment and that negative effects on the communication between reader and transponders due to said varying coupling capacities can be prevented. The characteristic features of the invention farther provide the advantage that the sensitivity to interferences caused by environmental interference sources is reduced compared with prior art systems.

The measures as claimed in claim 2,3, or 4, respectively, provide the advantage that a wide range of controllable impedances in various technologies is available so that for each RFID application those type of controllable impedances can be chosen that are well compatible with the design and production technologies of the respective RFID circuits.

The measures as claimed in claim 5 provide the advantage that an adaptive symmetric operation of the antenna of the RFID reader can be achieved by offsetting a virtual ground potential. The controllable signal drivers can be integrated into the signal generator, or can be integrated into an end stage amplifier for the high frequency electrical signals so that the number of necessary electronic components is reduced.

The measures as claimed in claim 6 provide the advantage that the common mode current and common mode voltage can be measured with little effort and high reliability.

The measures as claimed in claim 7 provide the advantage that no additional electronic components are required for measuring a voltage at a center tap of the secondary coil of a transformer. Since the transformer is additionally useful as balancing means and/or impedance matching means, this solution is cost effective and reliable.

The aspects defined above and further aspects of the invention are apparent from the exemplary embodiments to be described hereinafter and are explained with reference to these exemplary embodiments.

### BRIEF DESCRIPTION OF THE DRAWINGS

The invention will be described in more detail hereinafter with reference to exemplary embodiments. However, the invention is not limited to these exemplary embodiments.
Fig. 1 shows a schematic circuit diagram of a first embodiment of an RFID reader according to the invention.
Fig. 2 shows a schematic circuit diagram of a variant of the first embodiment of an RFID reader according to the invention.
Fig. 3 shows a schematic circuit diagram of a second embodiment of an RFID reader according to the invention.

### DESCRIPTION OF EMBODIMENTS

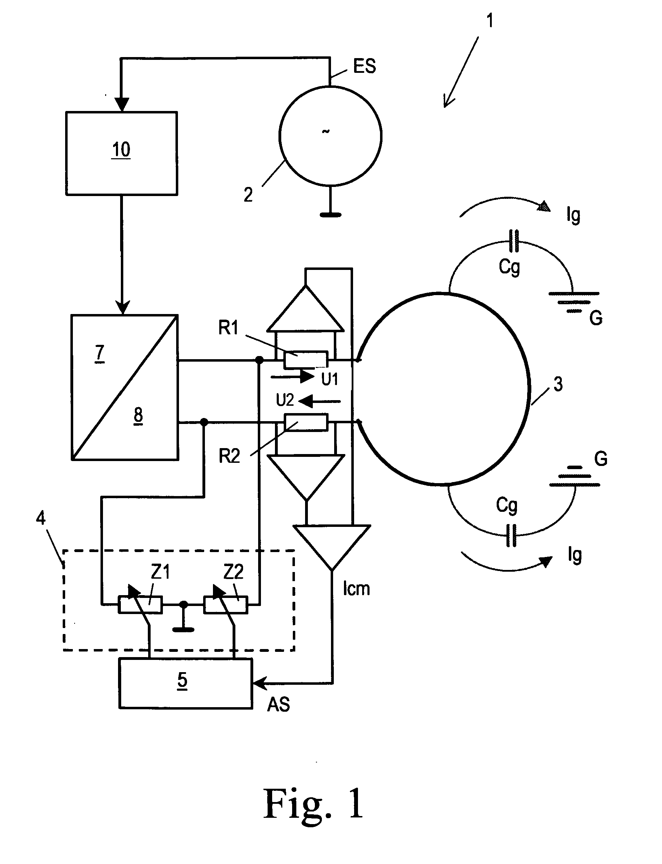

Fig. 1 shows in a schematic circuit diagram a first embodiment of an RFID reader 1 according to the invention. The RFID reader 1 comprises a signal generator 2 that generates high frequency electrical signals ES, usually in the range of between a few kHz and dozens of GHz. In a typical application of such an RFID reader 1 the frequency of the electric signals ES amounts to 13,56 MHz. The electric signals ES are fed to a loop antenna 3 via modulating means 10, signal balancing means 7 and an optional impedance matching circuit 8. It should be observed that although in the present embodiment the antenna 3 is configured as a loop antenna the invention is not restricted to loop antennas but comprises all types of appropriate antennas like dipoles. It should further be observed that although in the present embodiment modulating means 10 are provided there are also RFID readers without such modulating means in the forward link and the invention is also applicable to such RFID readers without modulating means. When supplied with the electrical signals ES the antenna 3 produces an alternating electromagnetic field that is received by transponders (not depicted in the drawing) being present within the range of said electromagnetic field. Thus, the antenna of the RFID reader 1 and those of the transponders are inductively coupled to one another.

The modulating means 10 of the RFID reader 1 modulate the electric signals ES as a carrier signal with information that should be transmitted to the transponders. It should be observed that the RFID reader 1 comprises further components in order to establish communication with transponders in an RFID system. However, these components are well-known to those skilled in the art and since they are not important in relation to the present invention they have been omitted from the drawings.

The optional impedance matching circuit 8 provides for a matching of the impedances of the output stage of the balancing means 7 with the impedance of the antenna 3 in respect of both magnitude and phase angle. Impedance matching is crucial when the impedances of the balancing means 7 and the antenna 3 do not match, in order to minimize energy losses and to prevent signal reflections. Matching circuits per se are known to those skilled in the art.

The balancing means 7 perform the task to carry out a symmetrical transformation of the electrical signals ES and to feed the antenna 3 in a symmetrical operational manner with the electric signals ES. A commonly known example of such balancing means 7 is a balanced-to-unbalanced transformer (BALUN). The antenna 3 of the RFID reader 1 is not only inductively coupled to antennas of transponders, but is also capacitively coupled to the environment G of the antenna 3. For the sake of easy understanding this capacitive coupling is represented in the drawings by a number of discrete coupling capacities Cg, although in reality the coupling capacities Cg are continuously distributed along the antenna 3. It has further to be noted that coupling between the antenna 3 and the environment G is not necessarily a capacitive coupling, but can also be an inductive coupling. Generally, the present invention is applicable to varying coupling impedances between the antenna 3 and the environment G. In an asymmetric operational mode of the antenna 3 the coupling capacities Cg would cause a ground current Ig to flow between the antenna 3 and its environment G. By operating the antenna 3 in a symmetric mode ground currents can be avoided as long as the coupling capacities Cg are uniformly spread along the loop formed by the antenna 3. However, when the coupling capacities Cg vary during use, either temporarily by e.g. persons or things passing through the electromagnetic field produced by the antenna 3, or permanently e.g. by placing constructional elements like steel beams within the communication range of the antenna, the antenna 3 becomes detuned and ground currents flow due to the asymmetrically spread capacities. Hence, the ground currents will still flow in the case when the antenna is retuned. While theoretically a permanent change of the coupling capacities could be compensated by an asymmetric BALUN or other known asymmetric balancing means, in practice this is not practicable when the permanent change of coupling capacities occurs after the RFID system has been installed. The ground currents Ig heavily reduce the performance of the antenna 3 and affect the communication between the RFID reader and transponders in an RFID system.

This problem is solved by the invention by providing tuning means 4 that are controllable in dependency of varying coupling capacities Cg. In the present embodiment the tuning means 4 are switched into the circuit between the impedance matching circuit 8 and the antenna 3. It should be noted that the invention is not limited to this position of the tuning means 4, but they could also be directly connected with the input terminals of the antenna 3, or could be positioned anywhere else in the circuit between the signal generator 2 and the antenna 3. The tuning means 4 comprise controllable impedances Z1, Z2. These controllable impedances Z1, Z2 may consist of mechanically controllable impedances, like coils with motor controlled displaceable taps or rotatable capacitors, and/or may comprise electronically controllable impedances, like varactor diodes, FETs operated in linear resistance range, or switched networks with weighted capacitors. The controllable impedances Z1, Z2 are controlled by a controller 5. The controller 5 has an actual signal input AS being adapted to receive actual signals that are representative for electric ground currents Ig flowing between the antenna 3 and its environment G. The controller 5 varies the impedances Z1, Z2 in respect of their magnitude and phase angle such that the sum of the electric ground currents Ig becomes a minimum (optimally null). In other words, the controller 5 works to achieve an adaptive symmetric operation of the antenna 3 by varying the controllable impedances Z1, Z2. In the present example of the invention the common mode current signal Icm of the antenna 3 is used as an actual signal representative for the ground current Ig. The common mode current signal Icm is calculated by measuring voltages U1, U2 across resistors R1, R2 being directly arranged in the signal path to and from the antenna 3 and calculating a difference of the voltages U1, U2 from each other. In another example not depicted in the drawing the common mode current signal of the antenna could be used as an actual signal representative for the ground current Ig. The common mode current signal could be sensed by winding the lines to and from the antenna 3 parallel to each other but in opposite current direction a few times around a toroidal ferrite core. Also wound around the toroidal ferrite core is a sensing coil. As long as the currents through the lines to and from the antenna 3 cancel each other out the output of the sensing coil will be null, otherwise the output at the sensing coil is representative for the common mode voltage of the antenna 3.

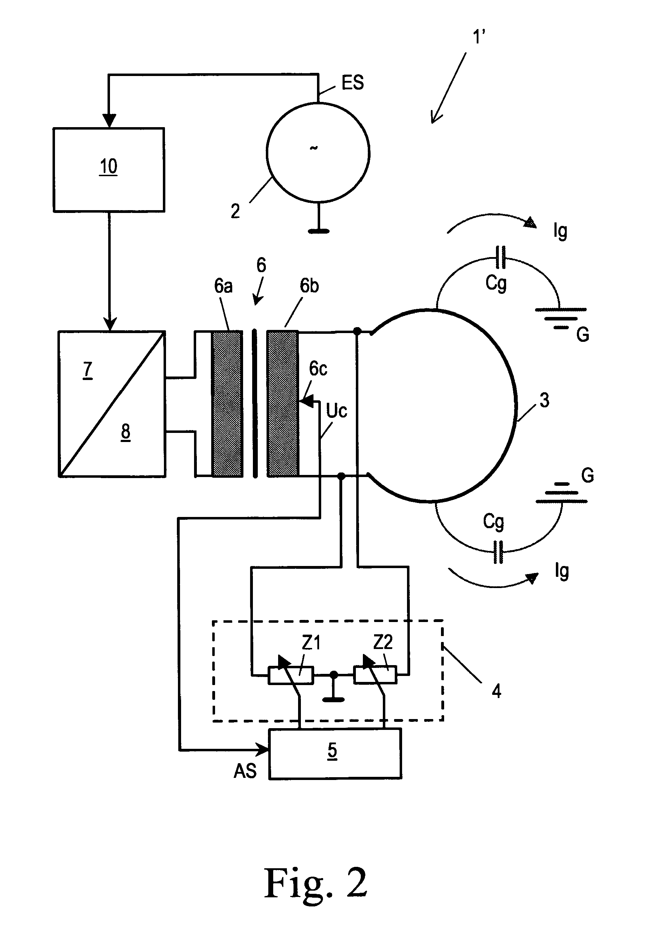

Fig. 2 shows a schematic circuit diagram of an RFID reader 1' which is a variant of the RFID reader 1 according to the first embodiment. The RFID reader 1' differs from the RFID reader 1 only in as much as the balancing means are incorporated by a transformer 6. The transformer 6 has a primary coil 6a to which the high frequency electric signals ES from the signal generator 2 are fed, and a secondary coil 6b being connected to the antenna 3. The controller 5 for controlling the tuning means 4 receives at its actual signal input AS an actual signal representative for electric ground currents Ig between the antenna 3 and the environment G via the coupling capacities Cg. In this embodiment of the invention the actual signal fed to the actual signal input AS of the controller 5 is a voltage signal Uc tapped from a center tap 6c of the secondary coil 6b of the transformer 6. The controller 5 is adapted to control the controllable impedances Z1, Z2 in dependency of the voltage signal Uc in such a manner that the sum of the electric ground current Ig becomes a minimum, or preferably completely disappears. The impedances Z1, Z2 are connected to the secondary coil 6b of the transformer 6.

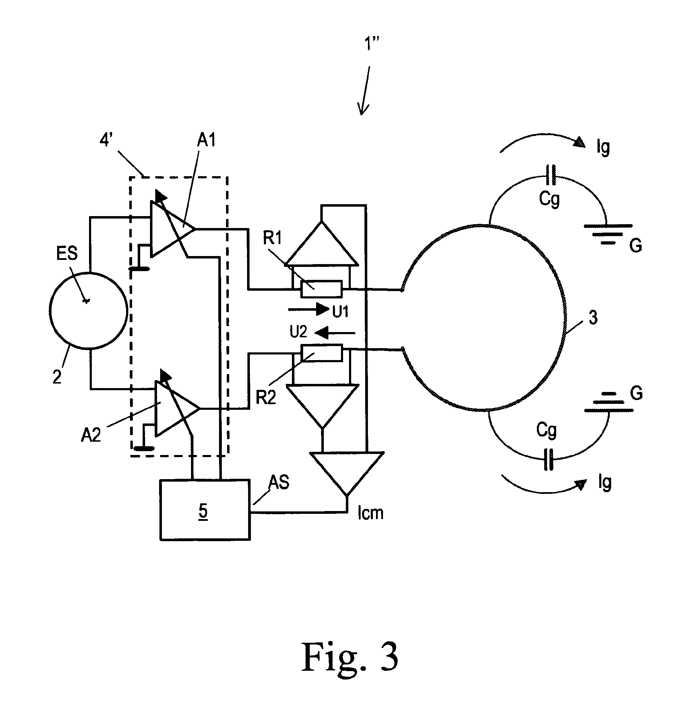

In Fig. 3 another embodiment of an RFID reader 1" according to the invention is shown in a schematic circuit diagram. The RFID reader 1" comprises a signal generator 2 for generating high frequency electrical signals ES and a loop antenna 3 to which the high frequency electrical signals ES are fed in a symmetric mode. In order to maintain the symmetric operation of antenna 3 even in the case when coupling capacities Cg that inevitably occur between the antenna 3 and its environment G are varying tuning means 4' are provided in the signal path of the signals ES. The tuning means 4' comprise controllable signal drivers A1, A2 that are arranged between the signal generator 2 and the antenna 3, The function of the signal drivers A1, A2 is to controllably offset a virtual ground potential. Like in the first embodiment of the invention also in this embodiment a controller 5 is provided for controlling the tuning means 4', i.e. the signal drivers A1, A2. The controller 5 has an actual signal input AS to receive an actual signal representative for electric ground currents Ig between the antenna 3 and the environment G via the coupling capacities Cg. In the present example of the invention the common mode current signal Icm of the antenna 3 is used as an actual signal representative for the ground current Ig. The common mode current signal Icm is calculated by measuring voltages U1, U2 across resistors R1, R2 being directly arranged in the signal path to and from the antenna 3 and calculating a difference of the voltages U1, U2 from each other. The controller 5 is adapted to control the signal drivers A1, A2 in such a manner that the virtual ground potential is offset to such extent that the sum of the electric ground current Ig becomes a minimum, or preferably completely disappears.

## Claims

1. An RFID reader (1, 1 ') comprising a signal generator (2) for generating high frequency electrical signals (ES) and an antenna (3) to which the high frequency electrical signals (ES) are feedable in a symmetric mode, further comprising tuning means (4,4') for maintaining the antenna (3) in a symmetric operating mode, wherein the tuning means (4,4') are controllable in dependency of varying coupling impedances, e.g. coupling capacities (Cg), occurring between the antenna (3) and its environment (G), the RFID reader further comprising a controller (5) for controlling the tuning means (4,4'), **characterized in that** the controller (5) has an actual signal input (AS) to receive an actual signal representative for electric ground currents (Ig) between the antenna (3) and the environment (G) via the coupling capacities (Cg), the controller (5) being adapted to control the tuning means (4,4') so that the sum of the electric ground currents (Ig) becomes a minimum.

2. The RFID reader as claimed in claim 1, **characterized in that** the tuning means (4) comprise controllable impedances (Z1, Z2) being arranged between the signal generator (2) and the antenna (3).

3. The RFID reader as claimed in claim 2, **characterized in that** the controllable impedances (Z1, Z2) comprise mechanically controllable impedances, like coils with motor controlled displaceable taps or rotatable capacitors.

4. The RFID reader as claimed in claim 2, **characterized in that** the controllable impedances (Z1, Z2) comprise electronically controllable impedances, like varactor diodes, FETs operated in linear resistance range, or switched networks with weighted capacitors.

5. The RFID reader as claimed in claim 1, **characterized in that** the tuning means (4') 25 comprise controllable signal drivers (A1, A2) being arranged within the signal generator or between the signal generator (2) and the antenna (3).

6. The RFID reader as claimed in claim 1, **characterized in that** a common mode current signal (Icm) or a common mode voltage signal of the antenna is fed to the actual signal input (AS) of the controller (5).

7. The RFID reader as claimed in claim 1, comprising a transformer (6) with a primary coil (6a) to which the high frequency electric signals (ES) from the signal generator (2) are fed, and a secondary coil (6b) being connected to the antenna (3), **characterized in that** the secondary coil (6b) has a center tap (6c) and the voltage (Uc) occurring at the center tap (6c) is fed to the actual signal input (AS) of the controller (5).

8. A method for operating an RFID reader (1, 1 ') as claimed in claim 1, **characterized in that** operation of the antenna (3) in symmetric operating mode is controlled in dependency of varying coupling impedances occurring between the antenna (3) and its environment (G).

## Patentansprüche

1. Ein RFID Leser (1, 1') aufweisend
einen Signalgenerator (2) zum Generieren von hochfrequenten elektrischen Signalen (ES) und
eine Antenne (3), zu welcher die hochfrequenten elektrischen Signale (ES) in einer symmetrischen Betriebsart zuführbar sind, ferner aufweisend
Abstimmungsmittel (4, 4') zum Beibehalten der Antenne (3) in einer symmetrischen Betriebsart, wobei die Abstimmungsmittel (4, 4') in Abhängigkeit von variierenden Koppelimpedanzen, z. B. Koppelkapazitäten (Cg), steuerbar sind, welche zwischen der Antenne (3) und deren Umgebung (G) auftreten, der RFID Leser ferner aufweisend
eine Steuereinheit (5) zum Steuern der Abstimmungsmittel (4, 4'),
**dadurch gekennzeichnet, dass**
die Steuereinheit (5) einen Ist-Signal Eingang (AS) hat, um ein gegenwärtiges Signal zu empfangen, welches repräsentativ für elektrische Erdungsströme (Ig) zwischen der Antenne (3) und der Umgebung (G) über die Kopplungskapazitäten (Cg) ist, wobei die Steuereinheit (5) angepasst ist, um die Abstimmungsmittel (4, 4') zu steuern, so dass die Summe der elektrischen Erdungsströme (Ig) minimal wird.

2. Der RFID Leser gemäß Anspruch 1, **dadurch gekennzeichnet, dass** die Abstimmungsmittel (4) steuerbare Impedanzen (Z1, Z2) aufweisen, welche zwischen dem Signalgenerator (2) und der Antenne (3) angeordnet sind.

3. Der RFID Leser gemäß Anspruch 2, **dadurch gekennzeichnet, dass** die steuerbaren Impedanzen (Z1, Z2) mechanisch steuerbare Impedanzen wie Spulen mit motorgesteuerten verstellbaren Anzapfungen oder rotierbare Kapazitäten aufweisen.

4. Der RFID Leser gemäß Anspruch 2, **dadurch gekennzeichnet, dass** die steuerbaren Impedanzen (Z1, Z2) elektronisch steuerbare Impedanzen wie Varactor Dioden, im linearen Widerstandsbereich betriebene FET's oder geschaltete Netzwerke mit gewichteten Kapazitäten aufweisen.

5. Der RFID Leser gemäß Anspruch 1, **dadurch gekennzeichnet, dass** die Abstimmungsmittel (4') steuerbare Signaltreiber (A1, A2) aufweisen, welche innerhalb des Signalgenerators (2) oder zwischen dem Signalgenerator (2) und der Antenne (3) angeordnet sind.

6. Der RFID Leser gemäß Anspruch 1, **dadurch gekennzeichnet, dass** ein Gleichtakt Stromsignal (Icm) oder ein Gleichtakt Spannungssignal von der Antenne zu dem Ist-Signal Eingang (AS) der Steuereinheit (5) zugeführt wird.

7. Der RFID Leser gemäß Anspruch 1, aufweisend
einen Transformator (6) mit einer primären Spule (6a), zu welcher die hochfrequenten elektrischen Signale (ES) von dem Signalgenerator (2) zugeführt werden, und einer sekundären Spule (6b), welche mit der Antenne (3) verbunden ist,
**dadurch gekennzeichnet, dass**
die sekundäre Spule (6b) eine zentrale Anzapfung (6c) hat und die Spannung (Uc), die an der zentralen Anzapfung (6c) auftritt, dem Ist-Signal Eingang (AS) der Steuereinheit (5) zugeführt wird.

8. Ein Verfahren zum Betreiben eines RFID Lesers (1, 1') gemäß Anspruch 1, **dadurch gekennzeichnet, dass**
ein Betrieb der Antenne (3) in einem symmetrischen Betriebszustand in Abhängigkeit von variierenden Kopplungsimpedanzen, die zwischen der Antenne (3) und deren Umgebung (G) auftreten, gesteuert wird.

## Revendications

1. Lecteur de RFID (1, 1') comprenant un générateur de signal (2) pour générer des signaux électriques haute fréquence (ES) et une antenne (3) dans laquelle les signaux électriques haute fréquence (ES) peuvent être envoyés dans un mode symétrique, comprenant en outre des moyens d'accord (4, 4') pour maintenir l'antenne (3) dans un mode de fonctionnement symétrique, dans lequel les moyens d'accord (4, 4') peuvent être commandés en fonction d'impédances de couplage variables, par exemple de capacités de couplage (Cg) intervenant entre l'antenne (3) et son environnement (G), le lecteur de RFID comprenant en outre un contrôleur (5) pour commander les moyens d'accord (4, 4'), **caractérisé en ce que** le contrôleur (5) a une entrée de signal réel (AS) pour recevoir un signal réel représentatif des courants de masse électrique (Ig) entre l'antenne (3) et l'environnement (G) par l'intermédiaire des capacités de couplage (Cg), le contrôleur (5) étant agencé de manière à commander les moyens d'accord (4, 4') pour que la somme des courants électriques de masse (Ig) devienne minimum.

2. Lecteur de RFID selon la revendication 1, **caractérisé en ce que** les moyens d'accord (4) comprennent des impédances commandables (Z1, Z2) qui sont disposées entre le générateur de signal (2) et l'antenne (3).

3. Lecteur de RFID selon la revendication 2, **caractérisé en ce que** les impédances commandables (Z1, Z2) comprennent des impédances commandables mécaniquement, comme des bobines avec des prises dont le déplacement peut être commandé par un moteur ou des condensateurs pouvant être tournés.

4. Lecteur de RFID selon la revendication 2, **caractérisé en ce que** les impédances commandables (Z1, Z2) comprennent des impédances commandables électroniquement, comme des diodes varactor, des FET fonctionnant dans leur zone de résistance linéaire ou des réseaux commutés avec des condensateurs pondérés.

5. Lecteur de RFID selon la revendication 1, **caractérisé en ce que** les moyens d'accord (4') comprennent des pilotes de signal commandables (A1, A2) qui sont disposés dans le générateur de signal ou entre le générateur de signal (2) et l'antenne (3).

6. Lecteur de RFID selon la revendication 1, **caractérisé par** en ce qu'un signal de courant en mode commun (Icm) ou un signal de tension en mode commun de l'antenne est envoyé sur l'entrée de signal réel (AS) du contrôleur (5).

7. Lecteur de RFID selon la revendication 1, comprenant un transformateur (6) avec une bobine primaire (6a) à laquelle sont appliqués les signaux électriques haute fréquence (ES) provenant du générateur de signal (2), et une bobine secondaire (6b) raccordée à l'antenne (3), **caractérisé en ce que** la bobine secondaire (6b) a une prise centrale (6c) et que la tension (Uc) apparaissant sur la prise centrale (6c) est injectée sur l'entrée de signal réel (AS) du contrôleur (5).

8. Procédé d'exploitation d'un lecteur de RFID (1, 1') selon la revendication 1, **caractérisé en ce que** le fonctionnement de l'antenne (3) en mode symétrique est commandé en fonction d'impédances de couplage variables intervenant entre l'antenne (3) et son environnement (G).
